# EUROPEAN PATENT APPLICATION

(11) **EP 4 806 615 A1**
(43) Date of publication of application: **16.09.2026**
(21) Application number: 24888742.4
(22) Date of filing: 06.11.2024
(51) Int. Cl.: B29C 33/44, B29C 35/08, B29C 39/02

(54) **SEAL MATERIAL MANUFACTURING METHOD, MOLD REMOVAL DEVICE, AND MANUFACTURING DEVICE**

(30) Priority: 09.11.2023 JP 2023191543
(71) Applicant: VALQUA, Ltd., Shinagawa-ku Tokyo 141-6024 (JP)
(72) Inventor: YOSHIDA, Sayaka, Gojo-shi, Nara 637-0014 (JP); TAKAHASHI, Kenichi, Gojo-shi, Nara 637-0014 (JP); UEDA, Akira, Gojo-shi, Nara 637-0014 (JP); SUZUKI, Kenn, Gojo-shi, Nara 637-0014 (JP)
(74) Representative: Vossius & Partner Patentanwälte Rechtsanwälte mbB
(86) International application number: PCT/JP2024/039466
(87) International publication number: WO 2025/100449

(57) **Abstract**

The present disclosure relates to a method of manufacturing a sealing material including a removal step of removing a sealing material from a mold. The mold includes an upper mold and a lower mold. The upper mold is provided with a through hole. In the removal step, in separating the upper mold and the lower mold from each other, the sealing material is removed from the upper mold by insertion of a pin into the through hole while the upper mold is raised. According to the present disclosure, a method of manufacturing a sealing material, a sealing material removal apparatus, and a sealing material manufacturing apparatus that allow facilitated removal of a sealing material from a mold in a removal step are provided.

## Description

### TECHNICAL FIELD

The present invention relates to a method of manufacturing a sealing material, a sealing material removal apparatus, and a sealing material manufacturing apparatus.

### BACKGROUND ART

Japanese Patent Laying-Open No. 2017-177720 (PTL 1) discloses a method of manufacturing a sealing material by filling a mold with a sealing material composition and curing the same.

### CITATION LIST

### PATENT LITERATURE

PTL 1: Japanese Patent Laying-Open No. 2017-177720

### SUMMARY OF INVENTION

### TECHNICAL PROBLEM

In a method of manufacturing a sealing material with a mold, in an example where the sealing material is formed of a material with low releasability or sticky, it may be difficult to remove the sealing material from the mold in a removal step.

An object of the present invention is to provide a method of manufacturing a sealing material, a sealing material removal apparatus, and a sealing material manufacturing apparatus that allow facilitated removal of a sealing material from a mold in a removal step.

### SOLUTION TO PROBLEM

The present invention provides a method of manufacturing a sealing material, a sealing material removal apparatus, and a sealing material manufacturing apparatus below.
[1] A method of manufacturing a sealing material with a mold includes
   a removal step of removing the sealing material from the mold,
   the mold includes an upper mold and a lower mold,
   the upper mold is provided with a through hole, and
   in the removal step, in separating the upper mold and the lower mold from each other, the sealing material is removed from the upper mold by insertion of a pin into the through hole while the upper mold is raised.
[2] In the method of manufacturing a sealing material according to [1],
   the upper mold is provided with a recess that defines a cavity in which the sealing material is to be formed,
   the through hole linearly passes from an upper-surface-side surface of the upper mold to the recess, and
   the pin pushes the sealing material out of the recess.
[3] In the method of manufacturing a sealing material according to [1] or [2],
   a substrate is arranged between the upper mold and the lower mold, and
   the pin pushes out the substrate.
[4] In the method of manufacturing a sealing material according to any one of [1] to [3],
   the upper mold is raised while air is blown into the through hole.
[5] In the method of manufacturing a sealing material according to any one of [1] to [4],
   there are a plurality of through holes,
   there are a plurality of pins, and
   pins constituting the plurality of pins are inserted into through holes constituting the plurality of through holes, respectively, all at the same time, or one by one or by twos or more at the same time in an arbitrary order.
[6] In the method of manufacturing a sealing material according to [5],
   when the mold is viewed from a thickness direction, the pins are inserted sequentially from a central portion of the upper mold toward an end portion of the upper mold.
[7] In the method of manufacturing a sealing material according to [5],
   with a through hole closest to an end portion of the upper mold among the plurality of through holes being defined as a first through hole and a through hole adjacent to an (n-1)th through hole being defined as an nth through hole (n being an integer not smaller than two) when the mold is viewed from a horizontal direction,
   the pins are inserted in the through holes one by one or by twos or more at the same time sequentially from the first through hole to the nth through hole or from an arbitrary through hole in an arbitrary order.
[8] In the method of manufacturing a sealing material according to [7],
   the pins constituting the plurality of pins are different in length from each other, and
   pins with longer lengths are inserted in the through holes sequentially from the first through hole to the nth through hole.
[9] In the method of manufacturing a sealing material according to [3],
   in separating the upper mold and the lower mold from each other, the upper mold is raised while the sealing material remains at a side of the upper mold, and after a collection apparatus that collects the sealing material is arranged between the substrate and the lower mold, the sealing material is pushed out of the upper mold onto the collection apparatus.
[10] In the method of manufacturing a sealing material according to [3],
   in separating the upper mold and the lower mold from each other, the upper mold is raised while the substrate remains at a side of the lower mold.
[11] In the method of manufacturing a sealing material according to any one of [1] to [10], the mold is subjected to a release treatment.
[12] The method of manufacturing a sealing material according to any one of [1] to [11] further includes
   a mold preparation step of preparing the mold,
   a filling step of filling the mold with a sealing material composition by using a filling machine, and
   a curing step of curing the sealing material composition filled in the mold,
   the mold out of which the sealing material has been taken in the removal step is returned to the mold preparation step.
[13] In the method of manufacturing a sealing material according to [12],
   the through hole performs a function of a filling nozzle insertion portion where a filing nozzle of the filling machine is to be inserted.
[14] In the method of manufacturing a sealing material according to any one of [1] to [13],
   the upper mold has a thickness not larger than 5 mm.
[15] In the method of manufacturing a sealing material according to any one of [1] to [14],
   the upper mold includes a conveyance frame, and
   the upper mold is raised while the conveyance frame is supported.
[16] A sealing material removal apparatus that removes a sealing material from a mold, the mold including an upper mold and a lower mold, the upper mold being provided with a through hole, the sealing material removal apparatus includes
   a pin at a position corresponding to the through hole, and
   means for raising the upper mold to separate the upper mold and the lower mold from each other and inserting the pin into the through hole.
[17] In the sealing material removal apparatus according to [16],
   there are a plurality of through holes,
   there are a plurality of pins, and
   pins constituting the plurality of pins are inserted into through holes constituting the plurality of through holes, respectively, all at the same time, or one by one or by twos or more at the same time in an arbitrary order.
[18] In the sealing material removal apparatus according to [17],
   when the mold is viewed from a thickness direction, the pins are inserted sequentially from a central portion of the upper mold toward an end portion of the upper mold.
[19] In the sealing material removal apparatus according to [17],
   with a through hole closest to an end portion of the upper mold among the plurality of through holes being defined as a first through hole and a through hole adjacent to an (n-1)th through hole being defined as an nth through hole (n being an integer not smaller than two) when the mold is viewed from a horizontal direction,
   the pins are inserted in the through holes one by one or by twos or more at the same time sequentially from the first through hole to the nth through hole or from an arbitrary through hole in an arbitrary order.
[20] In the sealing material removal apparatus according to [19],
   the pins constituting the plurality of pins are different in length from each other, and
   pins with longer lengths are inserted in the through holes sequentially from the first through hole to the nth through hole.
[21] In the sealing material removal apparatus according to any one of [16] to [20], the mold is subjected to a release treatment.
[22] A sealing material manufacturing apparatus including the sealing material removal apparatus according to any one of [16] to [21].

### ADVANTAGEOUS EFFECTS OF INVENTION

According to the present invention, a method of manufacturing a sealing material, a sealing material removal apparatus, and a sealing material manufacturing apparatus that allow facilitated removal of a sealing material from a mold in a removal step can be provided.

### BRIEF DESCRIPTION OF DRAWINGS

[Fig. 1] Fig. 1 is a cross-sectional view for illustrating a removal step.
[Fig. 2] Fig. 2 is a cross-sectional view for illustrating the removal step.
[Fig. 3] Fig. 3 is a cross-sectional view for illustrating the removal step.
[Fig. 4] Fig. 4 is a flowchart showing a method of manufacturing a sealing material.
[Fig. 5] Fig. 5 is a diagram schematically illustrating a system for successively manufacturing a sealing material.
[Fig. 6] Fig. 6 is a perspective view schematically showing a sealing material manufacturing apparatus.

### DESCRIPTION OF EMBODIMENTS

An embodiment of the present invention will be described below with reference to the drawings, however, the present invention is not limited to the embodiment below. In all drawings below, the scale is adjusted as appropriate for facilitated understanding of each constituent element and the scale of each constituent element shown in the drawings does not necessarily match the actual scale of the constituent element.

### <Method of Manufacturing Sealing Material>

A method of manufacturing a sealing material in the present invention is a method of manufacturing a sealing material with a mold, and includes a removal step of removing the sealing material from the mold. The mold includes an upper mold and a lower mold. The upper mold is provided with a through hole. In the removal step, the sealing material is removed from the upper mold by insertion of a pin into the through hole while the upper mold is raised.

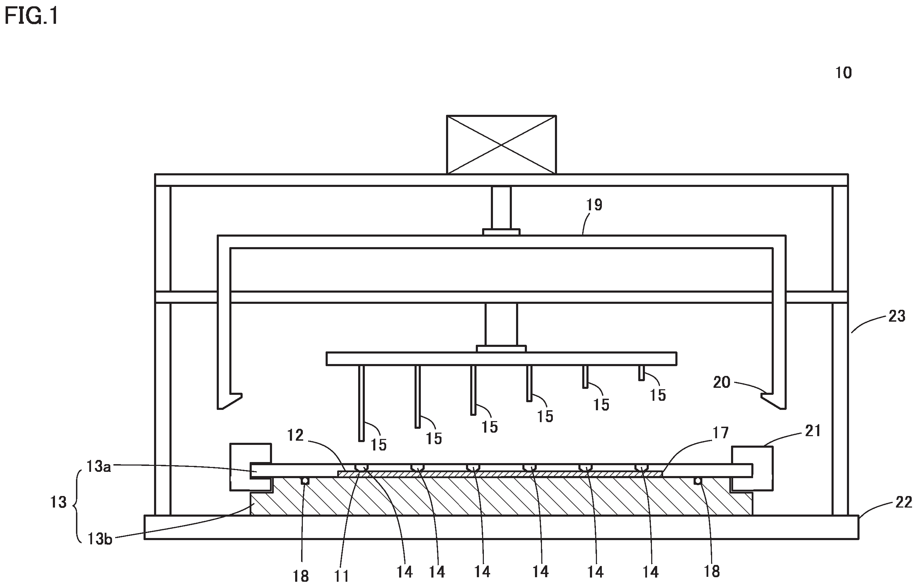

The removal step will be described with reference to Figs. 1 to 3. The removal step can be performed with a removal apparatus. Fig. 1 shows a cross-sectional view when a removal apparatus 10 is viewed from a horizontal direction. A mold 13 is arranged on a stage 22 of removal apparatus 10. Mold 13 may be conveyed from a step preceding the removal step (for example, a curing step). For example, a belt conveyor, a free-flow conveyor, a linear conveyor module, a conveyance roll, a conveyance arm, or the like can be employed as a method of conveying mold 13.

Mold 13 is composed of an upper mold 13a and a lower mold 13b. Mold 13 is provided with a cavity 17. Upper mold 13a is provided with a through hole 14 and a recess 12. Cavity 17 is defined by recess 12 and lower mold 13b. A sealing material 11 formed by a cured sealing material composition filled in cavity 17 is accommodated in mold 13.

Mold 13 may be carried to the removal step while upper mold 13a and lower mold 13b are fixed by a clamp (not shown). The clamp is removed before upper mold 13a and lower mold 13b are separated from each other.

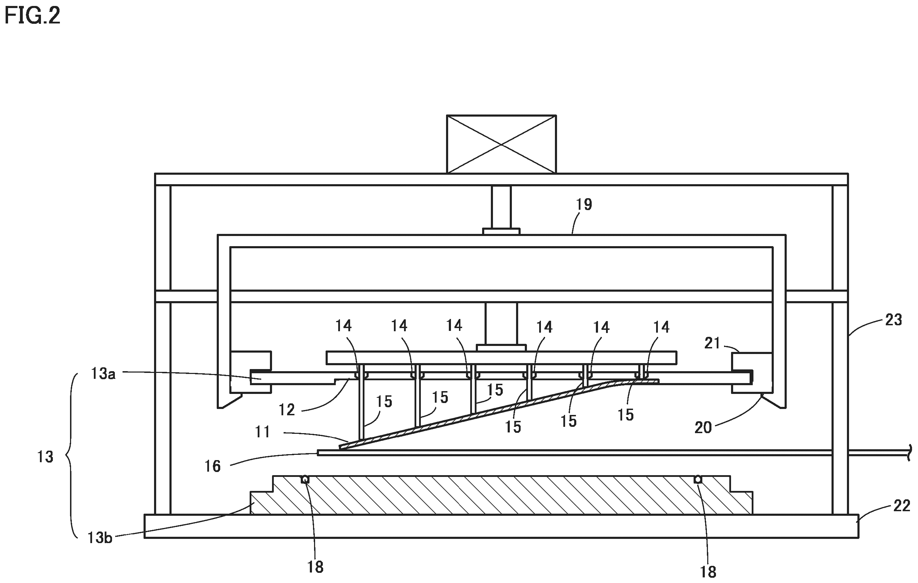

Then, as shown in Fig. 2, upper mold 13a and lower mold 13b are separated from each other by raising upper mold 13a. At the time of separation between upper mold 13a and lower mold 13b, sealing material 11 is located in recess 12. Since sealing material 11 is larger in surface area of contact with upper mold 13a than with lower mold 13b, force of adhesion to upper mold 13a is great. Therefore, even when upper mold 13a and lower mold 13b are separated from each other, the sealing material does not fall from upper mold 13a. Upper mold 13a and lower mold 13b can be separated from each other by placing an end portion of upper mold 13a on a tab 20 of a raising mechanism 19 supported by a support 23 and moving raising mechanism 19 upward.

By raising upper mold 13a, a pin 15 supported by support 23 can be inserted into through hole 14. By insertion of pin 15 into through hole 14, sealing material 11 can be removed from upper mold 13a. According to the present invention, even when the sealing material adheres to the mold and it is difficult to remove the sealing material from the mold, removal of the sealing material from the mold can be facilitated. In an example where the sealing material is provided with a substrate which will be described later and sealing material 11 is removed by pushing the substrate with pin 15, separation between the sealing material and the substrate at the time of separation between the upper mold and the lower mold tends to readily be suppressed.

Through hole 14 may linearly pass from an upper-surface-side surface of upper mold 13a to recess 12. In an example where through hole 14 linearly passes from the upper-surface-side surface of upper mold 13a to recess 12, pin 15 is inserted into through hole 14 while upper mold 13a is raised so that pin 15 is directly pressed against sealing material 11 to push out sealing material 11. Sealing material 11 can thus be removed from upper mold 13a. Through hole 14 may perform a function of a filling nozzle insertion portion where a filling nozzle for filling mold 13 with the sealing material composition is to be inserted. In an example where through hole 14 performs the function of the filling nozzle insertion portion, through hole 14 can be in a shape compatible with the filling nozzle. A tip end of pin 15 may be, for example, in a hemispherical shape or in a shape of a flat surface in order to prevent pin 15 from sticking into sealing material 11 or to prevent sealing material 11 from adhering to pin 15. The shape of the tip end of pin 15 can be selected depending on a type of an object with which pin 15 comes in contact, such as sealing material 11 or the substrate, and on a position where pin 15 is arranged in removal apparatus 10. When there are a plurality of pins, the shapes of the tip ends of the pins may be a combination of different shapes. The entirety or the tip end of pin 15 may be made of resin or rubber in order to suppress damage to sealing material 11.

A substrate (not shown) may be arranged between upper mold 13a and lower mold 13b. The substrate may be, for example, one type selected from the group consisting of a film, a plate material, and a molded product. The substrate may be, for example, a metal plate or the like, and may preferably be composed of SUS or the like. The substrate may be in intimate contact with the sealing material, or may be contained in a product together with the sealing material. In an example where the substrate is arranged between upper mold 13a and lower mold 13b, cavity 17 in which the sealing material is to be formed is defined by recess 12 in upper mold 13a and the substrate. When upper mold 13a is raised, the substrate may be raised together with the sealing material while it is in intimate contact with sealing material 11. In the example where the substrate is arranged between upper mold 13a and lower mold 13b, sealing material 11 can be removed from upper mold 13a by inserting pin 15 into through hole 14 while upper mold 13a is raised and by pushing the substrate with pin 15. In pushing the substrate with pin 15, through hole 14 into which pin 15 is to be inserted may linearly pass from the upper-surface-side surface of upper mold 13a without passing through recess 12. In separation between upper mold 13a and lower mold 13b, removal of the sealing material can be facilitated by raising the upper mold while the substrate remains at a side of lower mold 13b. Examples of a method of allowing the substrate to remain at the side of lower mold 13b include a method of suctioning the substrate from the side of lower mold 13b, a method of fixing the substrate to lower mold 13b, a method of hooking the substrate at the side of the lower mold, and the like.

Upper mold 13a may be provided with one through hole 14 or two or more through holes 14. Through hole 14 may have a diameter, for example, from 0.5 to 50 mm, preferably from 1 to 20 mm, and more preferably from 1 to 10 mm.

Pin 15 is arranged as being insertable into through hole 14 in upper mold 13a. Pin 15 should only have a diameter small enough to be inserted into through hole 14, and the diameter is, for example, from 0.3 to 45 mm.

In an example where there are a plurality of through holes 14, there can be a plurality of pins 15. Each pin can be arranged in accordance with a position of a corresponding through hole. One pin can be inserted into one through hole. Pins 15 constituting the plurality of pins can be inserted into the through holes constituting the plurality of through holes, respectively, all at the same time, or one by one or by twos or more at the same time in an arbitrary order. When mold 13 is viewed from a thickness direction, pins 15 can sequentially be inserted from a central portion of upper mold 13a toward the end portion of upper mold 13a. With a through hole closest to the end portion of upper mold 13a among the plurality of through holes being defined as a first through hole and a through hole adjacent to an (n-1)th through hole being defined as an nth through hole (n being an integer not smaller than two) when mold 13 is viewed from the horizontal direction, pins 15 are inserted in the through holes one by one or by twos or more at the same time sequentially from the first through hole to the nth through hole or from an arbitrary through hole in an arbitrary order, so that pins 15 can push sealing material 11 out of recess 12. n may be set, for example, to an integer such as 2 to 100.

Pins 15 constituting the plurality of pins may be different in length from each other. With the length of pin 15 to be inserted into the first through hole being longest and with the lengths of pins 15 to be inserted in the through holes sequentially from the first through hole to the nth through hole decreasing, pins with longer lengths can be inserted in the through holes sequentially from the first through hole to the nth through hole. Sealing material 11 can thus be pushed out of recess 12 stepwise, and impact at the time when sealing material 11 that comes out of recess 12 falls on a collection apparatus 16 can be mitigated. The length of pin 15 can be adjusted in accordance with the thickness of upper mold 13a and the number of pins 15, and may be set, for example, to 1 to 100 mm. Intervals at which pins 15 are arranged can be adjusted in accordance, for example, with the shape of sealing material 11 and the number of pins 15. In the example where through hole 14 performs the function of the filling nozzle insertion portion, the intervals at which pins 15 are arranged may be equal to the intervals of filling nozzles arranged in a filling apparatus, and pins 15 do not have to be arranged in all of through holes 14. The intervals at which pins 15 are arranged may be set, for example, to 1 to 500 mm.

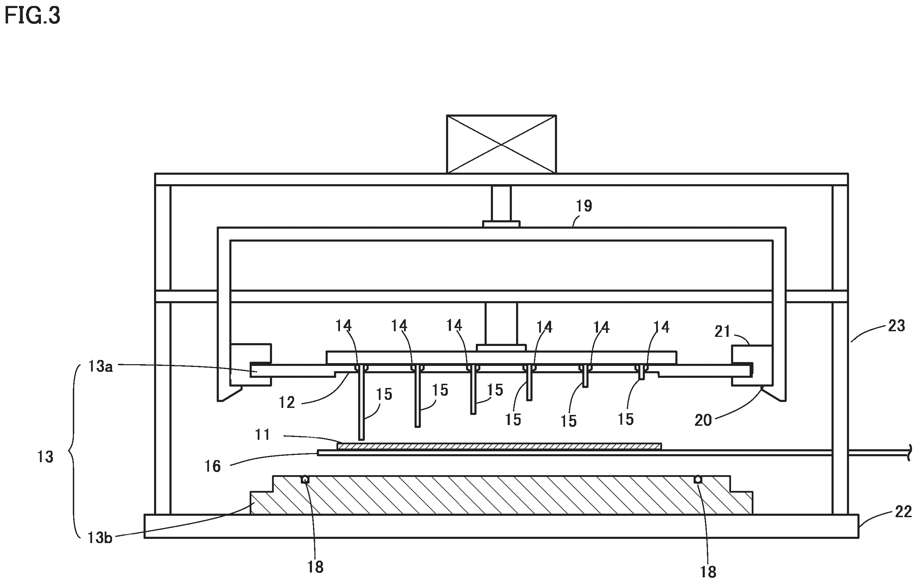

As shown in Fig. 3, in separation between upper mold 13a and lower mold 13b, upper mold 13a is raised while sealing material 11 remains at the side of upper mold 13a, collection apparatus 16 that collects sealing material 11 is arranged between sealing material 11 and lower mold 13b, or between the substrate and lower mold 13b in an example where the substrate is provided, and thereafter, sealing material 11 can be pushed out of upper mold 13a onto collection apparatus 16. Pushed out sealing material 11 can be collected by collection apparatus 16. Collection apparatus 16 can be arranged under upper mold 13a while upper mold 13a is being raised and before pin 15 pushes out sealing material 11. Collection apparatus 16 may be movable, and may be, for example, a robot arm or the like.

In order to facilitate separation of upper mold 13a and lower mold 13b from each other and to facilitate removal of sealing material 11 from mold 13, upper mold 13a can be raised while air is blown into through hole 14. Mold 13 may be subjected to a release treatment, a surface of recess 12 may be subjected to the release treatment, or a surface of lower mold 13b may be subjected to the release treatment. The release treatment can be performed by applying a release agent to a mold surface.

Upper mold 13a may have a thickness, for example, not larger than 20 mm, preferably not larger than 15 mm, more preferably not larger than 10 mm, and even more preferably not larger than 5 mm, and for example, not smaller than 1 mm. Lower mold 13b should only have a thickness large enough to withstand a filling pressure for filling the sealing material composition.

A material for mold 13 can be, for example, metal, glass, resin, or the like. In an example where the sealing material composition is an ultraviolet-curable sealing material composition which will be described later, in order to irradiate the ultraviolet-curable sealing material composition filled in mold 13 with ultraviolet rays to cure the same in a curing step which will be described later, mold 13 can have ultraviolet transparency. Ultraviolet transparency may be, for example, light transmittance not lower than 80% at a wavelength of 365 nm, and from a point of view of curability of the ultraviolet-curable sealing material composition, it is preferably not lower than 90% and more preferably not lower than 95% and normally not higher than 100%.

In an example where mold 13 has ultraviolet transparency, mold 13 may be formed of a material having ultraviolet transparency. Examples of the material having ultraviolet transparency include glass, quartz, polyester-based resin, polycarbonate-based resin, acrylic-based resin, tetrafluoroethylene-perfluoroalkyl vinyl ether copolymer (PFA), polyvinylidene fluoride (PVDF), polyvinyl fluoride (PVF), tetrafluoroethylene-ethylene copolymer (ETFE), polychlorotrifluoroethylene (ECTFE), cycloolefin polymer (COP), and the like. Among them, from a point of view of ease in handling and transparency, tetrafluoroethylene-perfluoroalkyl vinyl ether copolymer (PFA) and acrylic-based resin are preferable, and acrylic-based resin is more preferable. One material having ultraviolet transparency can be used alone, or two or more types of such materials can be used in combination.

Mold 13 may be provided with a conveyance frame 21 at the end portion of upper mold 13a. Mold 13 can be conveyed while conveyance frame 21 is placed on a conveyance apparatus. In an example where mold 13 is provided with conveyance frame 21, upper mold 13a can be raised while conveyance frame 21 is supported. A mold sealing material 18 may be arranged in mold 13 in order to enhance airtightness between upper mold 13a and lower mold 13b.

The sealing material composition can be, for example, an ultraviolet-curable sealing material composition, a thermosetting sealing material composition, or the like. From a point of view of a short time period for manufacturing the sealing material and generation of no heat, the sealing material composition is preferably an ultraviolet-curable sealing material composition. The ultraviolet-curable sealing material composition is a composition having a property of being cured by receiving irradiation with ultraviolet rays. The ultraviolet-curable sealing material composition can contain an ultraviolet-curable resin component and a photopolymerization initiator.

Examples of the ultraviolet-curable resin component include rubber-based resin, polyolefin-based resin, acrylic-based resin, epoxy resin, silicone-based resin, urethane-based resin, vinyl alkyl ether-based resin, polyvinylpyrrolidone-based resin, polyacrylamide-based resin, cellulose-based resin, and the like. The ultraviolet-curable resin component may include polyolefin-based resin, acrylic resin, or epoxy resin. Cured products thereof can have cross-linking points and can have rubber elasticity.

Examples of the rubber-based resin include isoprene rubber, butadiene rubber, styrene-butadiene rubber, chloroprene rubber, nitrile rubber, ethylene-propylene rubber, chlorosulfonated polyethylene rubber, acrylic rubber, fluorine rubber, epichlorohydrin rubber, urethane rubber, silicone rubber, and the like. Examples of the polyolefin-based resin include polyisobutylene and the like. Examples of commercially available ultraviolet-curable sealing material compositions containing polyolefin-based resin include Three Bond 3178 (manufactured by ThreeBond Co., Ltd.) and the like.

A content of the ultraviolet-curable resin component may be, for example, not lower than 50 mass % in the solid content of the ultraviolet-curable sealing material composition, and it is preferably not lower than 50 mass %, more preferably not lower than 60 mass %, further preferably not lower than 70 mass %, particularly preferably not lower than 80 mass %, and extremely preferably not lower than 90 mass %. The content of the ultraviolet-curable resin component may be, for example, not higher than 99 mass % or not higher than 98 mass % in the solid content of the ultraviolet-curable sealing material composition.

Examples of the photopolymerization initiator include a photocationic polymerization initiator, a photoradical polymerization initiator, and the like.

The content of the photopolymerization initiator may be, for example, not smaller than 0.001 part by mass and not larger than 10 parts by mass, preferably not smaller than 0.005 part by mass and not larger than 10 parts by mass, and more preferably not smaller than 0.01 part by mass and not larger than 10 parts by mass, with respect to 100 parts by mass of the ultraviolet-curable resin component.

The ultraviolet-curable sealing material composition can further contain a cross-linking agent, other resin components, an additive, a filler, and the like.

A viscosity of the ultraviolet-curable sealing material composition may be, for example, not higher than 500 Pa•s, and from a point of view of filling properties, it is preferably not higher than 300 Pa•s and more preferably not higher than 200 Pa•s. The viscosity of the ultraviolet-curable sealing material composition is measured, for example, with a B-type viscometer.

The method of manufacturing a sealing material can further include, in addition to the removal step, a mold preparation step of preparing the mold, a filling step of filling the mold with the sealing material composition, and a curing step of curing the sealing material composition filled in the mold. In an example where the mold is conveyable, by employing a plurality of molds and conveying the molds between steps, a plurality of steps can successively and independently be performed, which can enhance productivity of the sealing material.

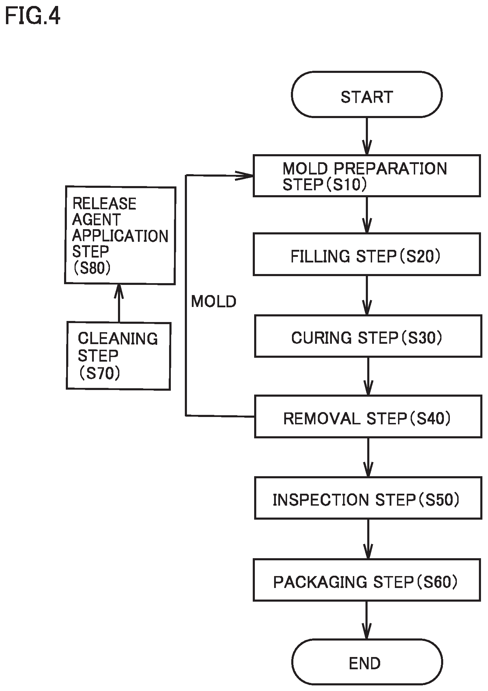

The method of manufacturing a sealing material may be a method of successively manufacturing a sealing material. As shown in Fig. 4, the method of manufacturing a sealing material can include a mold preparation step (S10), a filling step (S20), the curing step (S30), and a removal step (S40). The mold filled with the sealing material composition in the filling step (S20) is conveyed to the curing step (S30), and the mold out of which the sealing material has been taken in the removal step (S40) can be returned to the mold preparation step (S10). The method of manufacturing a sealing material shown in Fig. 4 further includes an inspection step (S50) of inspecting the taken-out sealing material, a packaging step (S60) of packaging the sealing material, a cleaning step (S70) of cleaning the mold to be returned to the mold preparation step (S10), a release agent application step (S80) of applying a release agent to the cleaned mold, and the like. In the method of manufacturing a sealing material, steps from the mold preparation step (S10) to the release agent application step (S80) can successively be performed. By returning the mold to the mold preparation step (S10) after the removal step (S40), the steps above can repeatedly and successively be performed.

A system for successively manufacturing the sealing material is not particularly limited, and examples thereof include a system in which the steps above are performed in series while the molds are linearly conveyed (which is also referred to as a linear system below), a system in which a plurality of linear systems are arranged side by side (which is also referred to as a multi-line system below), a system in which the steps above are performed while the molds are concentrically conveyed (which is also referred to as a rotation system below), and the like. Furthermore, a plurality of steps may be integrated and performed as a single step, or a plurality of steps may be performed in parallel.

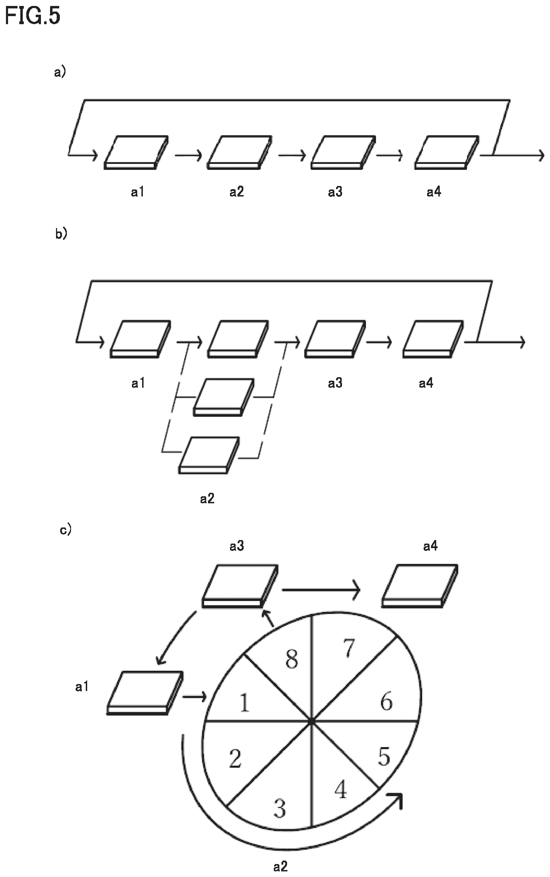

Fig. 5 is a diagram illustrating a system for successively manufacturing a sealing material, with a direction of conveyance of the molds being shown with an arrow. The system shown in Fig. 5(a) is a linear system in which steps a1, a2, a3, and a4 are successively performed in this order, the mold is collected in step a4 (for example, the removal step), and the mold is returned to step a1 (for example, the mold preparation step). The system shown in Fig. 5(b) is a linear system in which step a2 is performed a plurality of times in parallel while steps a1, a2, a3, and a4 are successively performed in this order, the mold is collected in step a4 (for example, the removal step), and the mold is returned to step a1 (for example, the mold preparation step). The system shown in Fig. 5(c) is the rotation system in which steps a1, a2, a3, and a4 are successively performed in this order, and in step a2, processing is performed while the molds are concentrically conveyed in the order of 1 to 8. As shown in Fig. 5(c), for example, a product can be taken out of the mold in step a3 (for example, the removal step), the mold can be returned to step a1 (for example, the mold preparation step), and the product can be conveyed to subsequent step a4 (for example, the inspection step or the like).

In the method of manufacturing a sealing material, time from the mold preparation step through the filling step and the curing step to removal of the sealing material in the removal step (cycle time) may be, for example, not longer than 60 seconds, it can be preferably not longer than 50 seconds, more preferably not longer than 40 seconds, further preferably not longer than 30 seconds, particularly preferably not longer than 20 seconds, and extremely preferably not longer than 10 seconds.

The type of sealing material manufactured by the method of manufacturing a sealing material is not particularly limited. Applications of the sealing material manufactured by the method of manufacturing a sealing material are not particularly limited, and may be, for example, applications such as vehicles, aircrafts, marine vessels, internal combustion engines, manufacturing equipment, plants, medical products, constructions, semiconductors, food, batteries, and the like. The sealing material in the present invention can also be combined with a mold, a resin component, or various sheets to form an integrally molded product, a composite product, or the like.

### <Sealing Material Removal Apparatus>

A sealing material removal apparatus according to another aspect of the present invention is a sealing material removal apparatus that removes a sealing material from a mold. The mold includes an upper mold and a lower mold. The upper mold is provided with a through hole. The sealing material removal apparatus includes a pin at a position corresponding to the through hole and means for raising the upper mold and inserting the pin into the through hole. The sealing material removal apparatus may further include a support, a stage, and a collection apparatus. The description above applies to the sealing material, the mold, the upper mold, the lower mold, the through hole, the pin, the support, the stage, and the collection apparatus. The collection apparatus can be arranged between a substrate and the lower mold to collect the sealing material pushed out of the upper mold when the upper mold is raised while the sealing material remains at the side of the upper mold in separation of the upper mold and the lower mold from each other.

The means for raising the upper mold to separate the upper mold and the lower mold from each other and inserting the pin into the through hole in the upper mold can be, for example, a conveyance arm or the like that raises the upper mold while a conveyance frame of the upper mold is supported. The removal apparatus may include means for blowing air into the through hole. The removal apparatus may include means for allowing the substrate to remain at the side of the lower mold in separation of the upper mold and the lower mold from each other. Examples of the means for allowing the substrate to remain at the side of the lower mold include means for suctioning the substrate from the side of the lower mold, means for fixing the substrate to the lower mold, means for hooking the substrate at the side of the lower mold, and the like. The mold may be subjected to the release treatment, the surface of the recess may be subjected to the release treatment, and the surface of the lower mold may be subjected to the release treatment. The release treatment can be performed by applying a release agent to a mold surface.

There may be a plurality of through holes. There may be a plurality of pins. Each pin can be arranged in accordance with a position of a corresponding through hole. One pin may be inserted into one through hole. The pins constituting the plurality of pins may be inserted into the through holes constituting the plurality of through holes, respectively, all at the same time, or one by one or by twos or more at the same time in an arbitrary order. When the mold is viewed from the thickness direction, the pins may sequentially be inserted from the central portion of the upper mold toward the end portion of the upper mold. With one of through holes closest to the end portion of the upper mold among the plurality of through holes being defined as a first through hole and a through hole adjacent to an (n-1)th through hole being defined as an nth through hole (n being an integer not smaller than two) when the mold is viewed from the horizontal direction, the pins may be inserted in the through holes one by one or by twos or more at the same time sequentially from the first through hole to the nth through hole or from an arbitrary through hole in an arbitrary order. The pins constituting the plurality of pins may be different in length from each other. Pins longer in length may be inserted in the through holes sequentially from the first through hole to the nth through hole.

### <Sealing Material Manufacturing Apparatus>

A sealing material manufacturing apparatus can include the filling apparatus described above. In the sealing material manufacturing apparatus, a plurality of apparatuses used for performing the steps above may be arranged linearly, some or all of the plurality of apparatuses may be arranged in parallel, the plurality of apparatuses may concentrically be arranged, or these arrangements may be combined.

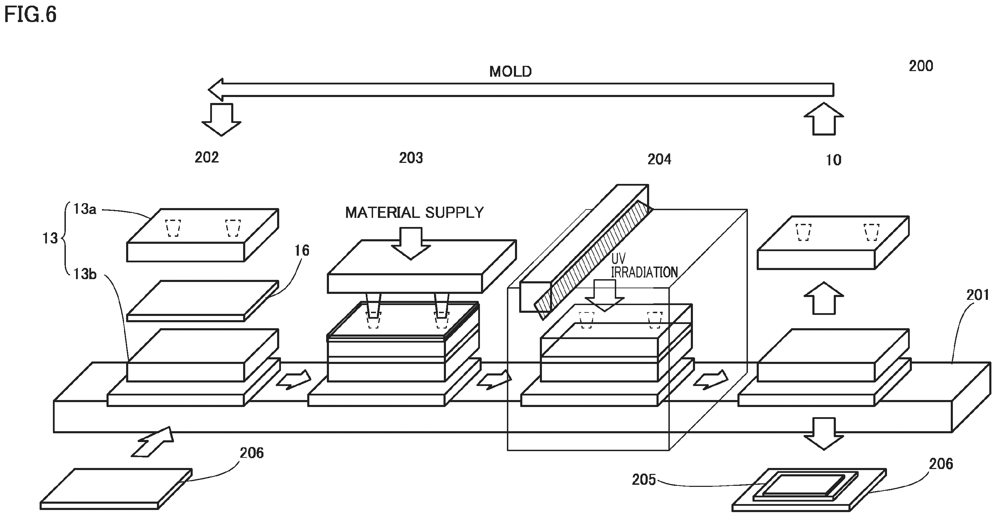

Fig. 6 shows a sealing material manufacturing apparatus of the linear system. The sealing material manufacturing apparatus in the present invention will be described with reference to a sealing material manufacturing apparatus 200 shown in Fig. 6. In sealing material manufacturing apparatus 200, a conveyance apparatus 201, a mold supply apparatus 202, mold 13, a filling apparatus 203, a curing apparatus 204, and removal apparatus 10 are linearly arranged. Curing apparatus 204 includes an ultraviolet (UV) ray emission apparatus. Sealing material manufacturing apparatus 200 may be a manufacturing apparatus for manufacturing a sealing material from an ultraviolet-curable sealing material composition. Mold 13 is supplied by mold supply apparatus 202, mold 13 is conveyed to filling apparatus 203 by conveyance apparatus 201, mold 13 is filled with the ultraviolet-curable sealing material composition by filling apparatus 203, ultraviolet rays are then emitted in curing apparatus 204, and after curing, a sealing material 205 is removed from mold 13 in removal apparatus 10. In mold supply apparatus 202, a substrate 206 is arranged between upper mold 13a and lower mold 13b. Mold 13 is returned to mold supply apparatus 202 as following the arrow from removal apparatus 10.

For example, a belt conveyor, a free-flow conveyor, a linear conveyor module, a conveyance roll, a conveyance arm, or the like can be employed as conveyance apparatus 201.

The ultraviolet ray emission apparatus can include, for example, a light source such as a metal halide lamp or an LED. According to the present invention, since the thickness of the upper mold can be reduced, a distance between the light source and the ultraviolet-curable sealing material composition filled in the mold can readily be made shorter. In an example where the distance from the ultraviolet-curable sealing material composition filled in the mold is short, the ultraviolet-curable sealing material composition filled in the mold tends to readily be cured in a short period of time, for example, even without irradiation with ultraviolet rays at high illuminance. The distance between the light source and the ultraviolet-curable sealing material composition filled in the mold may be, for example, not longer than 30 mm, and from a point of view of efficient curing of the ultraviolet-curable sealing material composition, it is preferably not longer than 20 mm, more preferably not longer than 15 mm, further preferably not longer than 10 mm, and particularly preferably not longer than 6 mm.

### EXAMPLES

The present invention will be described below in further detail by way of Examples.

### <Example 1>

In the mold preparation step, a mold was prepared by arranging an SUS plate between an upper mold and a lower mold made of an acrylic-based resin. The upper mold had a filling nozzle insertion portion, a runner portion, and a gate portion. The upper mold had a thickness of 5 mm. The mold was conveyed to the filling step by a belt conveyor. After a filling nozzle was inserted in a through hole (the filling nozzle insertion portion) in the upper mold, the mold was pressed by a filling machine. After the upper mold and the lower mold were fixed with a clamp, a cavity in the mold was filled with an ultraviolet-curable sealing material composition (containing polyisobutylene and a photopolymerization initiator) from the filling nozzle. The filling nozzle was then removed from the mold. Thereafter, the mold filled with the ultraviolet-curable sealing material composition was conveyed to the curing step, ultraviolet rays were emitted from an ultraviolet ray emission apparatus including an LED as a source of ultraviolet rays, and the ultraviolet-curable sealing material composition was cured. Thereafter, the mold was conveyed to the removal step and the clamp was removed. The lower mold was fixed by suction, and thereafter the conveyance frame of the upper mold was raised by an arm. In the recess in the upper mold, the sealing material was located together with the SUS plate. Pins different in length were arranged in a removal apparatus. The pins were inserted in the through holes that are arranged from one end portion toward the other end portion of the upper mold, sequentially from one with a longer length. The sealing material was removed from one end portion toward the other end portion of the upper mold, and the sealing material removed from the upper mold was collected by a collection apparatus while the SUS plate was in intimate contact therewith.

### REFERENCE SIGNS LIST

10 removal apparatus; 11 sealing material; 12 recess; 13 mold; 13a upper mold; 13b lower mold; 14 through hole; 15 pin; 16 collection apparatus; 17 cavity; 18 mold sealing material; 19 raising mechanism; 20 tab; 21 conveyance frame; 22 stage; 23 support; 200 sealing material manufacturing apparatus; 201 conveyance apparatus; 202 mold supply apparatus; 203 filling apparatus; 204 curing apparatus; 205 sealing material; 206 substrate.

## Claims

1. A method of manufacturing a sealing material with a mold, comprising:
a removal step of removing the sealing material from the mold, wherein
the mold includes an upper mold and a lower mold,
the upper mold is provided with a through hole, and
in the removal step, in separating the upper mold and the lower mold from each other, the sealing material is removed from the upper mold by insertion of a pin into the through hole while the upper mold is raised.

2. The method of manufacturing a sealing material according to claim 1, wherein
the upper mold is provided with a recess that defines a cavity in which the sealing material is to be formed,
the through hole linearly passes from an upper-surface-side surface of the upper mold to the recess, and
the pin is directly pressed against the sealing material to push the sealing material out of the recess.

3. The method of manufacturing a sealing material according to claim 1, wherein
a substrate is arranged between the upper mold and the lower mold, and
the pin pushes out the substrate.

4. The method of manufacturing a sealing material according to claim 1, wherein
the upper mold is raised while air is blown into the through hole.

5. The method of manufacturing a sealing material according to claim 1, wherein
there are a plurality of through holes,
there are a plurality of pins, and
pins constituting the plurality of pins are inserted into through holes constituting the plurality of through holes, respectively, all at the same time, or one by one or by twos or more at the same time in an arbitrary order.

6. The method of manufacturing a sealing material according to claim 5, wherein
when the mold is viewed from a thickness direction, the pins are inserted sequentially from a central portion of the upper mold toward an end portion of the upper mold.

7. The method of manufacturing a sealing material according to claim 5, wherein
with a through hole closest to an end portion of the upper mold among the plurality of through holes being defined as a first through hole and a through hole adjacent to an (n-1)th through hole being defined as an nth through hole (n being an integer not smaller than two) when the mold is viewed from a horizontal direction,
the pins are inserted in the through holes one by one or by twos or more at the same time sequentially from the first through hole to the nth through hole or from an arbitrary through hole in an arbitrary order.

8. The method of manufacturing a sealing material according to claim 7, wherein
the pins constituting the plurality of pins are different in length from each other, and
pins with longer lengths are inserted in the through holes sequentially from the first through hole to the nth through hole.

9. The method of manufacturing a sealing material according to claim 3, wherein
in separating the upper mold and the lower mold from each other, the upper mold is raised while the sealing material remains at a side of the upper mold, and after a collection apparatus that collects the sealing material is arranged between the substrate and the lower mold, the sealing material is pushed out of the upper mold onto the collection apparatus.

10. The method of manufacturing a sealing material according to claim 3, wherein
in separating the upper mold and the lower mold from each other, the upper mold is raised while the substrate remains at a side of the lower mold.

11. The method of manufacturing a sealing material according to claim 1, wherein
the mold is subjected to a release treatment.

12. The method of manufacturing a sealing material according to claim 1, further comprising:
a mold preparation step of preparing the mold;
a filling step of filling the mold with a sealing material composition by using a filling machine; and
a curing step of curing the sealing material composition filled in the mold, wherein
the mold out of which the sealing material has been taken in the removal step is returned to the mold preparation step.

13. The method of manufacturing a sealing material according to claim 12, wherein
the through hole performs a function of a filling nozzle insertion portion where a filing nozzle of the filling machine is to be inserted.

14. The method of manufacturing a sealing material according to claim 1, wherein
the upper mold has a thickness not larger than 5 mm.

15. The method of manufacturing a sealing material according to claim 1, wherein
the upper mold includes a conveyance frame, and
the upper mold is raised while the conveyance frame is supported.

16. A sealing material removal apparatus that removes a sealing material from a mold, the mold including an upper mold and a lower mold, the upper mold being provided with a through hole, the sealing material removal apparatus comprising:
a pin at a position corresponding to the through hole; and
means for raising the upper mold to separate the upper mold and the lower mold from each other and inserting the pin into the through hole.

17. The sealing material removal apparatus according to claim 16, wherein
there are a plurality of through holes,
there are a plurality of pins, and
pins constituting the plurality of pins are inserted into through holes constituting the plurality of through holes, respectively, all at the same time, or one by one or by twos or more at the same time in an arbitrary order.

18. The sealing material removal apparatus according to claim 17, wherein
when the mold is viewed from a thickness direction, the pins are inserted sequentially from a central portion of the upper mold toward an end portion of the upper mold.

19. The sealing material removal apparatus according to claim 17, wherein
with a through hole closest to an end portion of the upper mold among the plurality of through holes being defined as a first through hole and a through hole adjacent to an (n-1)th through hole being defined as an nth through hole (n being an integer not smaller than two) when the mold is viewed from a horizontal direction,
the pins are inserted in the through holes one by one or by twos or more at the same time sequentially from the first through hole to the nth through hole or from an arbitrary through hole in an arbitrary order.

20. The sealing material removal apparatus according to claim 19, wherein
the pins constituting the plurality of pins are different in length from each other, and
pins with longer lengths are inserted in the through holes sequentially from the first through hole to the nth through hole.

21. The sealing material removal apparatus according to claim 16, wherein
the mold is subjected to a release treatment.

22. A sealing material manufacturing apparatus comprising the sealing material removal apparatus according to any one of claims 16 to 21.
